# FASCICULE DE BREVET EUROPEEN

(11) **EP 0 907 214 B1**
(45) Date de publication et mention de la délivrance du brevet: **06.03.2002**
(21) Numéro de dépôt: 98401909.1
(22) Date de dépôt: 27.07.1998
(51) Int. Cl.: H01M 4/62, H01M 10/40

(54) **Liant pour électrode de système électrochimique à électrolyte non aqueux**
Bindemittel für Elektrode eines elektrochemischen Systems mit einem nichtwässrigen Elektrolyt
Binder for electrode of an electrochemical system employing a non-aqueous electrolyte

(30) Priorité: 04.08.1997 FR 9709948
(43) Date de publication de la demande: 07.04.1999
(73) Titulaire: ALCATEL, 75008 Paris (FR)
(72) Inventeur: Barusseau, Sylvie, 91220 Bretigny/Orge (FR); Martin, Florence, 91290 La Norville (FR); Simon, Bernard, 92130 Issy les Moulineaux (FR)
(74) Mandataire: El Manouni, Josiane

(56) Documents cités:
- PATENT ABSTRACTS OF JAPAN vol. 017, no. 199 (E-1352), 19 avril 1993 & JP 04 342966 A (TOSHIBA BATTERY CO LTD), 30 novembre 1992
- CHEMICAL ABSTRACTS, vol. 79, no. 14, 8 octobre 1973 Columbus, Ohio, US; abstract no. 80201, GUHA, A.K.: "Liquid binders for jute non-woven fabrics" XP002063449 & J. TEXT. ASS., vol. 34, no. 2, 1973, pages 75-82,

## Description

La présente invention concerne un nouveau liant pour l'élaboration d'une électrode destinée à être utilisée dans un système électrochimique à électrolyte non-aqueux, en particulier un générateur rechargeable (ou accumulateur) à électrolyte organique.

La présente invention s'étend en outre à tout système électrochimique comportant au moins une telle électrode.

Les électrodes des accumulateurs à électrolyte organique classiques contiennent une matière électrochimiquement active qui constitue une structure d'accueil dans laquelle les cations, par exemple les cations lithium, s'insèrent et se désinsèrent au cours du cyclage.

Chaque électrode est obtenue par dépôt d'une pâte sur un collecteur de courant, ladite pâte contenant la matière électrochimiquement active, éventuellement des additifs conducteurs, un liant polymère et un diluant.

L'utilisation d'un liant polymère pour fabriquer l'électrode vise tout d'abord à assurer la cohésion de la matière active qui est sous forme pulvérulente, sans masquer une part importante de la surface électrochimiquement active. Cet effet dépend des propriétés de mouillage du liant. Une bonne liaison avec la matière active est généralement garantie par l'existence, dans le liant polymère, de groupements donnant lieu à des liaisons chimiques ou hydrogène, comme les groupements hydroxyle, carboxyle et amide. Un compromis doit cependant être trouvé car une interaction trop forte du liant avec la matière active conduit à un recouvrement trop important qui entraîne une baisse de la surface active et, par voie de conséquence, de la capacité à régime élevé.

Le liant polymère doit également permettre l'adhésion de la pâte sur le collecteur de courant.

Le liant polymère doit conférer à l'électrode une souplesse suffisante pour la manipulation, en particulier pour supporter l'étape de spiralage, dans le cas du montage d'accumulateurs cylindriques.

Le liant polymère doit accompagner les variations dimensionnelles de la matière active lors des cycles de charge et de décharge.

Ces quatre objectifs doivent être remplis avant l'assemblage de l'accumulateur et tout au long de son fonctionnement.

Le liant polymère doit également être doté de certaines propriétés électrochimiques.

En particulier, le liant polymère doit être compatible avec les électrolytes utilisés, de préférence sans nécessiter une étape de réticulation qui compliquerait la formulation de l'électrode et le procédé.

Enfin, les réducteurs et les oxydants utilisés comme matériaux actifs étant très puissants, le liant doit posséder une réactivité la plus faible possible pour être capable de supporter sans dégradation des conditions extrêmes de fonctionnement.

Il apparaît donc difficile à l'aide d'un seul liant polymère de remplir tous ces objectifs, certains apparaissant en effet contradictoires.

Par exemple, la stabilité électrochimique de l'électrode au cyclage nécessite des liaisons fortes entre le liant polymère et la matière active. La présence de groupements fonctionnels assure cette fonction. Cependant, les liaisons interchaînes fortes conduisent généralement à une structure mécaniquement rigide.

Dans les accumulateurs au lithium classiques, on emploie couramment comme liant un polymère comme le polytétrafluoroéthylène (PTFE), qui possède une excellente stabilité dans l'électrolyte.

Cependant, les propriétés antiadhérentes du PTFE interdisent l'utilisation d'un support conducteur mince tel qu'un feuillard, indispensable à l'obtention de fortes énergies volumiques.

De plus, la stabilité du PTFE vis-à-vis des réducteurs puissants est faible en raison de la présence de nombreux atomes de fluor.

Le polyfluorure de vinylidène (PVDF) et ses copolymères, décrits dans le document EP-0 492 586, sont utilisés comme liant d'électrode dans le cadre d'un procédé de préparation mettant en oeuvre un feuillard métallique.

Ce procédé consiste à mettre le PVDF en solution dans un solvant, puis à lui ajouter une matière active pour obtenir une pâte. On enduit le feuillard métallique de faible épaisseur avec la pâte comprenant la matière active et la solution de polymère. Le solvant est ensuite éliminé en séchant l'électrode. On obtient ainsi des électrodes denses et minces.

Les propriétés mécaniques et électrochimiques du PVDF permettent d'atteindre un bon compromis entre les multiples objectifs exposés plus haut.

Cependant, l'adhérence sur le feuillard reste mauvaise, en raison de la faible tension superficielle du PVDF, et l'ajout de promoteurs d'adhésion est nécessaire.

De plus, la stabilité du PVDF vis-à-vis des réducteurs n'est pas satisfaisante en raison de la présence de fluor, ce qui conduit à des problèmes de sécurité en cas d'emballement thermique.

D'autres polymères ont été plus récemment proposés comme liant pour électrode.

Le polyacrylonitrile (PAN) confère une excellente stabilité électrochimique en raison de ses groupements fortement polaires, mais l'électrode est rigide.

De même, l'acide polyacrylique (PAAc), la polyacrylamide (PAA) et leurs copolymères conduisent à des structures extrêmement stables mais rigides, ce qui nécessite l'addition d'un plastifiant.

Les élastomères, tels que le terpolymère éthylène/ propylène/diène (EPDM), le caoutchouc styrène/butadiène (SBR), le caoutchouc acrylonitrile/butadiène (NBR) et les copolymères bloc styrène/butadiène/styrène (SBS) ou styrène/acrylonitrile/styrène (SIS), confèrent à l'électrode d'excellentes propriétés mécaniques, mais donnent lieu à des baisses importantes de capacité au cours du cyclage.

Le document EP-0 606 533 décrit des polyimides qui permettent d'obtenir un bon compromis entre les propriétés mécaniques et électrochimiques, mais qui nécessitent une étape de réticulation à haute température. En outre, les polyimides sont des polymères coûteux.

De même, ont été proposés comme liant d'électrode les mélanges de polymères aux propriétés complémentaires dans lesquels la formulation contient :
- au moins un polymère appartenant à la famille des élastomères non-fluorés qui confère la souplesse à l'électrode, comme par exemple le terpolymère éthylène/propylène/diène (EPDM), le polyuréthane (PU), le néoprène, le polyisobutylène (PIB), le caoutchouc-butyle, et
- un polymère capable d'assurer des liaisons fortes avec la matière active, contenant des groupements susceptibles d'engager des liaisons hydrogène comme les groupements OH, COOH, CONH₂ et NH, par exemple le polyvinylalcool, l'acide polyacrylique, les résines phénoliques, les polyamides et leurs copolymères.

Le principal défaut de ces mélanges est d'une part la difficulté à obtenir une pâte homogène en raison de l'incompatibilité des constituants, et d'autre part la difficulté à prédire la répartition des liants dans l'électrode finale, les différents composants ayant des propriétés de solubilité ou de coagulation différentes lors de l'étape d'élimination du solvant.

La présente invention concerne un liant qui permet de remplir à la fois tous les objectifs présentés plus haut.

Le document US-5,262,255 décrit l'utilisation du caoutchouc acrylonitrile-butadiène comme liant d'électrode négative.

Le document JP-04 342 966 décrit l'utilisation d'un liant de caoutchouc styrène-butadiène (SBR) et de carboxyméthylcellulose (CMC) ayant un degré de polymérisation compris entre 100 et 2 000 et un poids moléculaire moyen compris entre 25 000 et 400 000.

Ce liant représente 0,5 à5 % en poids de l'électrode.

Il a été décrit plus haut que les électrodes des générateurs rechargeables à électrolyte organique classiques sont obtenues par dépôt, sur un collecteur de courant, d'une pâte contenant la matière active, le liant et un diluant.

Après dépôt de cette pâte, l'électrode est séchée afin d'éliminer le diluant. L'électrode obtenue est donc constituée de matière active et de liant. Dans le but d'optimiser les performances électrochimiques de l'électrode, en particulier sa capacité massique, on cherche à diminuer la proportion de liant qu'elle contient.

La présente invention est basée sur la découverte qu'à taux de liant comparable et de faible valeur (inférieure ou égale à 3% en poids), une électrode contenant un liant caoutchouc acrylonitrile-butadiène/carboxyméthylcellulose est dotée de performances électrochimiques supérieures à une électrode contenant un liant caoutchouc styrène-butadiène/carboxyméthylcellulose, notamment en termes de capacité spécifique et de vieillissement en cyclage.

La présente invention est également basée sur la découverte que, lorsque la carboxyméthylcellulose utilisée en association avec le caoutchouc acrylonitrile-butadiène possède un poids moléculaire moyen (PM) inférieur à 130 000, les performances électrochimiques de l'électrode contenant ce liant sont nettement insuffisantes pour les applications visées.

La présente invention a pour objet un liant pour électrode de système électrochimique à électrolyte non aqueux, caractérisé en ce qu'il contient du caoutchouc acrylonitrile-butadiène et de la carboxyméthylcellulose de poids moléculaire moyen supérieur à 200 000.

Le liant de l'invention contient, de préférence, entre 50 et 70% en poids de caoutchouc acrylonitrile-butadiène, et entre 30 et 50% en poids de carboxyméthylcellulose par rapport au poids des deux polymères.

Le liant de l'invention contient, plus préférentiellement, entre 60 et 70% en poids de caoutchouc acrylonitrile-butadiène, et entre 30 et 40% en poids de carboxyméthylcellulose par rapport au poids des deux polymères.

La présente invention concerne tout système électrochimique, par exemple un accumulateur, un supercondensateur ou un système électrochrome, à électrolyte non aqueux incluant au moins une électrode contenant le liant de l'invention.

Ladite électrode peut être obtenue selon le procédé décrit ci-après.

La première étape de ce procédé consiste en la fabrication d'une pâte à partir d'une matière active divisée et du liant de l'invention mis en solution dans l'eau.

Les étapes suivantes consistent en l'étalement de la pâte sur un feuillard métallique, par exemple en cuivre, nickel, acier, inox ou aluminium, suivi d'un séchage en étuve puis d'un calandrage jusqu'à obtention de la porosité désirée comprise entre 20 et 60%.

La présente invention concerne plus particulièrement un générateur rechargeable au lithium à électrolyte organique comprenant une électrode négative contenant le liant de l'invention.

Ladite électrode négative contient de préférence un matériau actif choisi parmi tout type de matériau susceptible d'intercaler ou d'absorber des cations Li⁺ à bas potentiel, c'est-à-dire un potentiel inférieur à 1,5V.

Le matériau négatif peut être choisi parmi les carbones, en particulier les carbones cristallisés, comme les graphites en poudre ou en fibres, les carbones peu cristallisés graphitables, comme les cokes, ou non graphitables, comme les carbones vitreux ou les noirs de carbone, et leurs mélanges.

Le matériau négatif peut également être choisi parmi les composés contenant un métal susceptible de former un alliage avec le lithium, comme les oxydes, sulfures, nitrures et carbures métalliques.

Ladite électrode négative contient de préférence moins de 6% et préférentiellement environ 3% en poids de liant.

L'accumulateur au lithium à électrolyte organique peut avantageusement comprendre, en outre, une électrode positive contenant un matériau actif choisi parmi tout type de matériau positif susceptible d'intercaler ou d'absorber des cations Li⁺ à haut potentiel, c'est-à-dire un potentiel supérieur à 2,5V.

Le matériau positif peut être de préférence à base d'oxydes lithiés de métaux de transition.

L'électrolyte organique de l'accumulateur au lithium à électrolyte organique de l'invention est de préférence une solution d'un sel conducteur dissous dans un solvant choisi parmi les carbonates, dont les carbonates cycliques comme les carbonates d'éthylène, de propylène, de vinylène, et les carbonates non cycliques comme le carbonate de diméthyle, le carbonate de diéthyle, le carbonate de méthyléthyle, les esters d'alkyle comme les formiates, les acétates, les propionates, les butyrates, les composés cycliques comprenant un atome d'azote et d'oxygène, comme la N-méthyl-pyrrolidone, les éthers et leurs mélanges.

Le sel conducteur est de préférence choisi parmi LiPF₆, LiBF₄, LiClO₄, LiCF₃SO₃ et le trifluorosulfonimide de lithium.

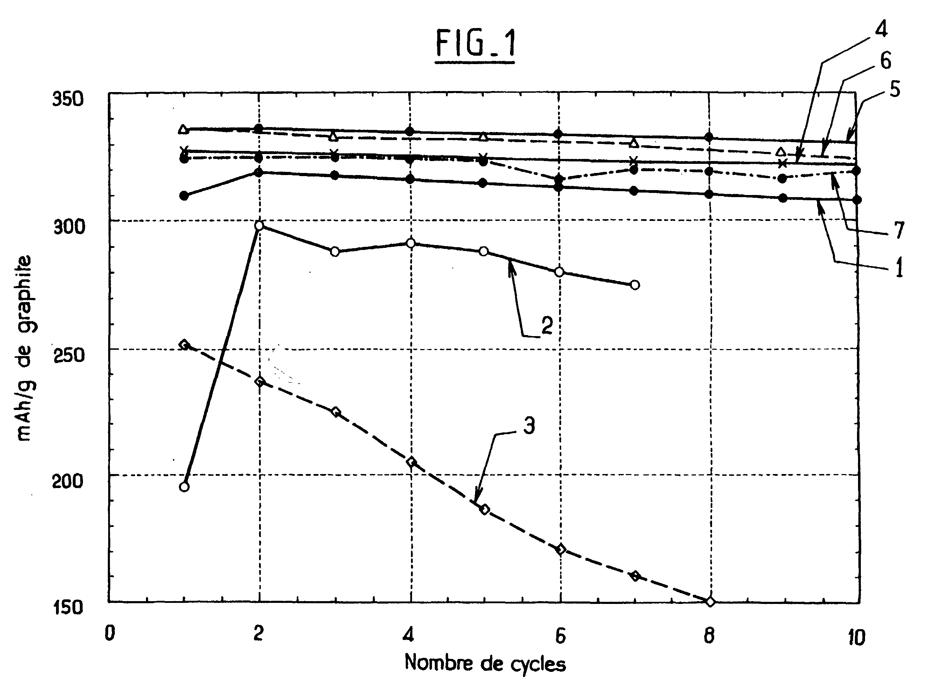

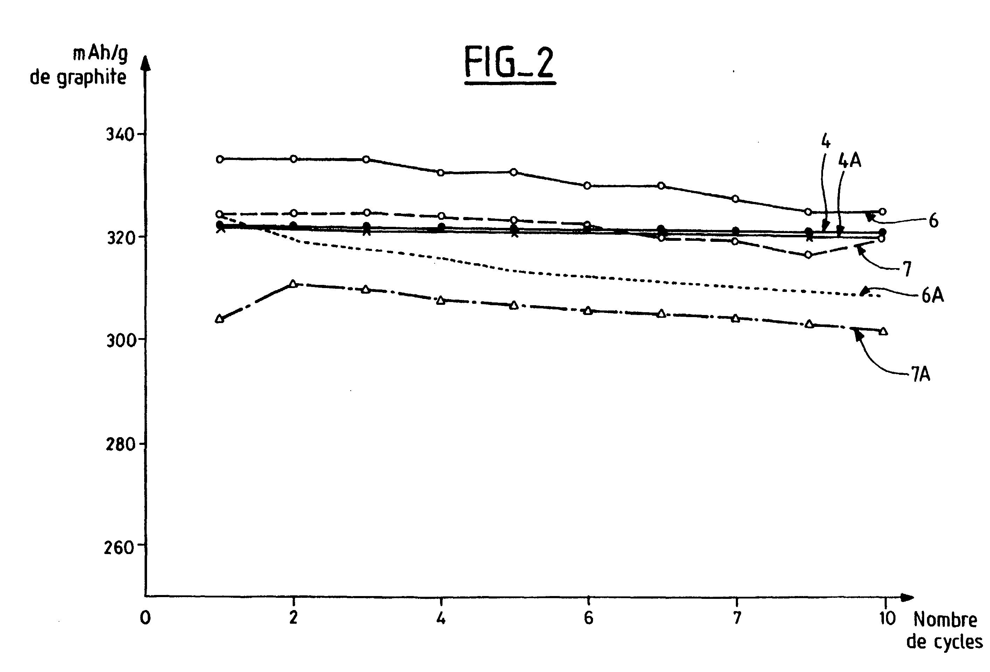

D'autres caractéristiques et avantages de la présente invention apparaîtront à la lecture des exemples suivants, donnés à titre illustratif mais non limitatif, en référence aux figures 1 et 2.

Les figures 1 et 2 représentent l'évolution de la capacité réversible massique en mAh/g de graphite, au cours d'un cyclage effectué à 20mA/g de graphite, de différentes cellules boutons comprenant une électrode fabriquée à partir du liant de l'invention ou d'un liant de l'art antérieur. La capacité massique est donnée en ordonnée et le nombre de cycles figure en abscisse.

Sur la figure 1, les courbes 1 à 7 représentent l'évolution, au cours du cyclage, de la capacité massique des cellules boutons fabriquées respectivement aux exemples 1 à 4, 5, 6 et 7.

Sur la figure 2, les courbes 4, 4A, 6, 6A, 7 et 7A représentent l'évolution, au cours du cyclage, de la capacité massique des cellules boutons fabriquées respectivement aux exemples 4, 4A, 6, 6A, 7 et 7A.

### Exemples :

Toutes les électrodes citées ci-dessous ont été testées électrochimiquement en cellule bouton avec
- une contre-électrode de lithium métallique, et
- un électrolyte constitué d'un mélange carbonate de propylène/carbonate d'éthylène/ carbonate de diméthyle dans les proportions 1/1/3 dans lequel est dissous du LiPF₆ à la concentration 1M.

Le cyclage galvanostatique est effectué à 20mA/g de graphite. Les caractéristiques électrochimiques de la cellule bouton ainsi obtenue sont présentées dans le tableau 1 et sur les figures 1 et 2.

### Exemple 1 comparatif :

polyfluorure de vinylidène (PVDF)
taux de liant dans l'électrode : 15% en poids

Une solution de PVDF à 4,8% dans la N-méthyl-pyrrolidone (NMP) est préparée en mélangeant 15g de PVDF dans 200 g de NMP. Puis 85 g de graphite en poudre sont ajoutés progressivement à cette solution.

La pâte obtenue est étalée sur un feuillard de cuivre, l'électrode est ensuite séchée à 120°C puis calandrée jusqu'à l'obtention d'une porosité comprise entre 35 et 40%.

La capacité réversible de l'électrode négative est relativement stable en cyclage, avec toutefois une perte de performances en cyclage en conditions extrêmes à 60°C se traduisant par 0,13% de perte de capacité par cycle (voir courbe 1 de la figure 1).

### Exemple 2 comparatif :

NBR
taux de liant dans l'électrode : 5 % en poids

5g de caoutchouc acrylonitrile-butadiène (NBR) en solution dans la N-méthyl-pyrrolidone (NMP) sont ajoutés à 95g de graphite artificiel en poudre.

L'électrode, après évaporation du solvant (120°C), est constituée de graphite à 95% et de NBR à 5%.

La capacité de l'électrode négative est faible en raison d'une polarisation trop élevée de l'électrode (voir courbe 2 de la figure 1).

### Exemple 3 comparatif :

NBR/CMC dans les proportions massiques 2/1
taux de liant dans l'électrode : 6% en poids
CMC de PM inférieur à 130 000

94 g de graphite sont ajoutés à 4g de caoutchouc acrylonitrile-butadiène (NBR) en solution à 4,1% dans l'eau.

Puis 2 g de carboxyméthylcellulose (CMC) en solution dans l'eau à une concentration de 1% en poids sont ajoutés au mélange précédent. La carboxyméthylcellulose utilisée est une CMC de basse viscosité, c'est-à-dire ayant un poids moléculaire moyen compris entre 108 300 et 130 000.

La pâte obtenue est étalée sur un feuillard de cuivre, l'électrode est ensuite séchée à 120°C puis calandrée jusqu'à l'obtention d'une porosité comprise entre 40 et 50%.

La capacité de l'électrode négative est instable en cyclage et conduit à une baisse des performances à 60°C se traduisant par une perte de capacité de 4,7% par cycle (voir courbe 3 de la figure 1).

### Exemple 4 :

NBR/CMC dans les proportions massiques 2/1
taux de liant dans l'électrode : 6% en poids
CMC de PM supérieur à environ 300 000

94g de graphite sont ajoutés à 4g de caoutchouc acrylonitrile-butadiène (NBR) en solution à 4,1% dans l'eau.

Puis 2g de CMC en solution dans l'eau à une concentration de 1% en poids sont ajoutés au mélange précédent. La carboxyméthylcellulose utilisée est une CMC de haute viscosité, c'est-à-dire ayant un poids moléculaire moyen compris entre 325 000 et 435 000.

La pâte obtenue est étalée sur un feuillard de cuivre, l'électrode est ensuite séchée à 120°C puis calandrée jusqu'à l'obtention d'une porosité comprise entre 40 et 50%.

La capacité de l'électrode négative est relativement stable en cyclage même aux conditions extrêmes à 60°C. La capacité est égale à 320mAh/g de graphite après 10 cycles, ce qui correspond à une perte de capacité de 0,06% par cycle (voir courbe 4 des figures 1 et 2).

### Exemple 4A comparatif :

SBR/CMC dans les proportions massiques 2/1
taux de liant dans l'électrode : 6 % en poids
CMC de PM supérieur à 300 000

94g de graphite sont ajoutés à 4g de caoutchouc styrène-butadiène (SBR) en solution à 5,1% dans l'eau.

Puis 2g de CMC en solution dans l'eau à une concentration de 1% en poids sont ajoutés au mélange précédent. La carboxyméthylcellulose utilisée est une CMC de haute viscosité, c'est-à-dire ayant un poids moléculaire moyen compris entre 325 000 et 435 000.

La pâte obtenue est étalée sur un feuillard de cuivre, l'électrode est ensuite séchée à 120°C puis calandrée jusqu'à l'obtention d'une porosité comprise entre 40 et 50%.

La capacité de l'électrode négative est relativement stable en cyclage même aux conditions extrêmes à 60°C et comparable à celle obtenue avec l'électrode décrite dans l'exemple 4.

La capacité est égale à 319mAh/g de graphite après 10 cycles, ce qui correspond à une perte de capacité de 0,07% par cycle (voir courbe 4A de la figure 2).

### Exemple 5 :

NBR/CMC dans les proportions massiques 2/1
taux de liant dans l'électrode : 6% en poids
CMC de PM supérieur à environ 200 000

94g de graphite sont ajoutés à 4g de caoutchouc acrylonitrile-butadiène (NBR) en solution à 4,1% dans l'eau.

Puis 2g de CMC en solution dans l'eau à la concentration de 1% en poids, sont ajoutés au mélange précédent. La carboxyméthylcellulose utilisée est une CMC de moyenne viscosité, c'est-à-dire ayant un poids moléculaire moyen compris entre 195 000 et 260 000.

La pâte obtenue est étalée sur un feuillard de cuivre, l'électrode est ensuite séchée à 120°C puis calandrée jusqu'à l'obtention d'une porosité comprise entre 40 et 50%.

La capacité de l'électrode négative est stable en cyclage même aux conditions extrêmes à 60°C. La capacité est égale à 330mAh/g de graphite après 10 cycles, ce qui correspond à une perte de capacité de 0,16% par cycle (voir courbe 5 de la figure 1).

### Exemple 6 :

NBR/CMC dans les proportions massiques 2/1
taux de liant dans l'électrode : 3% en poids
CMC de PM supérieur à 300 000

97g de graphite sont ajoutés à 2g de caoutchouc acrylonitrile-butadiène (NBR) en solution à 4,1% dans l'eau.

Puis 1g de CMC en solution dans l'eau à la concentration de 1% en poids sont ajoutés au mélange précédent. La carboxyméthylcellulose utilisée est une CMC de haute viscosité, c'est-à-dire ayant un poids moléculaire moyen compris entre 325 000 et 435 000.

La pâte obtenue est étalée sur un feuillard de cuivre, l'électrode est ensuite séchée à 120°C puis calandrée jusqu'à l'obtention d'une porosité comprise entre 40 et 50%.

L'électrode est alors constituée de 97% de graphite, 2% de NBR et 1% de CMC, soit un taux de liant divisé par deux par rapport à celui utilisé dans l'exemple 4.

La capacité de l'électrode négative est relativement stable en cyclage même aux conditions extrêmes à 60°C. La capacité est égale à 324mAh/g de graphite après 10 cycles, ce qui correspond à une perte de capacité de 0,3% par cycle (voir courbe 6 des figures 1 et 2).

### Exemple 6A comparatif :

SBR/CMC dans les proportions massiques 2/1
taux de liant dans l'électrode : 3% en poids
CMC de PM supérieur à 300 000

97g de graphite sont ajoutés à 2g de caoutchouc styrène-butadiène (SBR) en solution à 5,1% dans l'eau.

Puis 1g de CMC en solution dans l'eau à la concentration de 1% en poids sont ajoutés au mélange précédent. La carboxyméthylcellulose utilisée est une CMC de haute viscosité, c'est-à-dire ayant un poids moléculaire moyen compris entre 325 000 et 435 000.

La pâte obtenue est étalée sur un feuillard de cuivre, l'électrode est ensuite séchée à 120°C puis calandrée jusqu'à l'obtention d'une porosité comprise entre 40 et 50%.

La capacité réversible de l'électrode négative est inférieure à celle obtenue avec l'électrode décrite dans l'exemple 6. La capacité est égale à 308mAh/g de graphite après 10 cycles, ce qui correspond à une perte de capacité de 0,5% par cycle (voir courbe 6A de la figure 2).

Avec un liant constitué de caoutchouc acrylonitrile-butadiène et de carboxyméthylcellulose de poids moléculaire moyen supérieur à environ 300 000, la capacité est égale à 324mAh/g de graphite après 10 cycles ce qui correspond à une perte de capacité de 0,3% par cycle (voir courbe 6 de la figure 2).

A un taux de liant dans l'électrode égal à 3%, la capacité de l'électrode contenant un liant acrylonitrile-butadiène/carboxyméthylcellulose est donc supérieure à la capacité de l'électrode contenant un liant styrène-butadiène/carboxyméthylcellulose dans les mêmes proportions.

### Exemple 7 :

NBR/CMC dans les proportions massiques 1/1
Taux de liant dans l'électrode : 2% en poids
CMC de PM supérieur à environ 300 000

98g de graphite sont ajoutés à 1g de caoutchouc acrylonitrile-butadiène (NBR) en solution à 4,1% dans l'eau.

Puis 1g de CMC en solution dans l'eau à la concentration de 1% en poids sont ajoutés au mélange précédent. La carboxyméthylcellulose utilisée est une CMC de haute viscosité, c'est-à-dire ayant un poids moléculaire moyen compris entre 325 000 et 435 000.

La pâte obtenue est étalée sur un feuillard de cuivre, l'électrode est ensuite séchée à 120°C puis calandrée jusqu'à l'obtention d'une porosité comprise entre 40 et 50%.

L'électrode est alors constituée à 98% de graphite, 1% de SBR et 1% de CMC, soit un taux de polymère égal à 2%.

La capacité de l'électrode négative est inférieure à celle obtenue avec l'électrode décrite dans l'exemple 7. La capacité est égale à 319mAh/g de graphite après 10 cycles, ce qui correspond à une perte de capacité par cycle quasi nulle (voir courbe 7 de la figure 1).

### Exemple 7A comparatif :

SBR/CMC dans les proportions massiques 1/1
taux de liant dans l'électrode : 2% en poids
CMC de PM supérieur à environ 300 000

98g de graphite sont ajoutés à 1g de caoutchouc styrène-butadiène (SBR) en solution à 5,1% dans l'eau.

Puis 1g de CMC en solution dans l'eau à la concentration de 1% en poids sont ajoutés au mélange précédent. La carboxyméthylcellulose utilisée est une CMC de haute viscosité, c'est-à-dire ayant un poids moléculaire moyen compris entre 325 000 et 435 000.

La pâte obtenue est étalée sur un feuillard de cuivre, l'électrode est ensuite séchée à 120°C puis calandrée jusqu'à l'obtention d'une porosité comprise entre 40 et 50%.

La capacité est égale à 301mAh/g de graphite après 10 cycles, ce qui correspond à une perte de capacité par cycle de 0,35% par cycle (voir courbe 7A de la figure 2).

A un taux de liant dans l'électrode égal à 3%, la capacité de l'électrode contenant un liant acrylonitrile-butadiène/carboxyméthylcellulose est donc supérieure à la capacité de l'électrode contenant un liant styrène-butadiène/carboxyméthylcellulose ayant les mêmes proportions massiques.

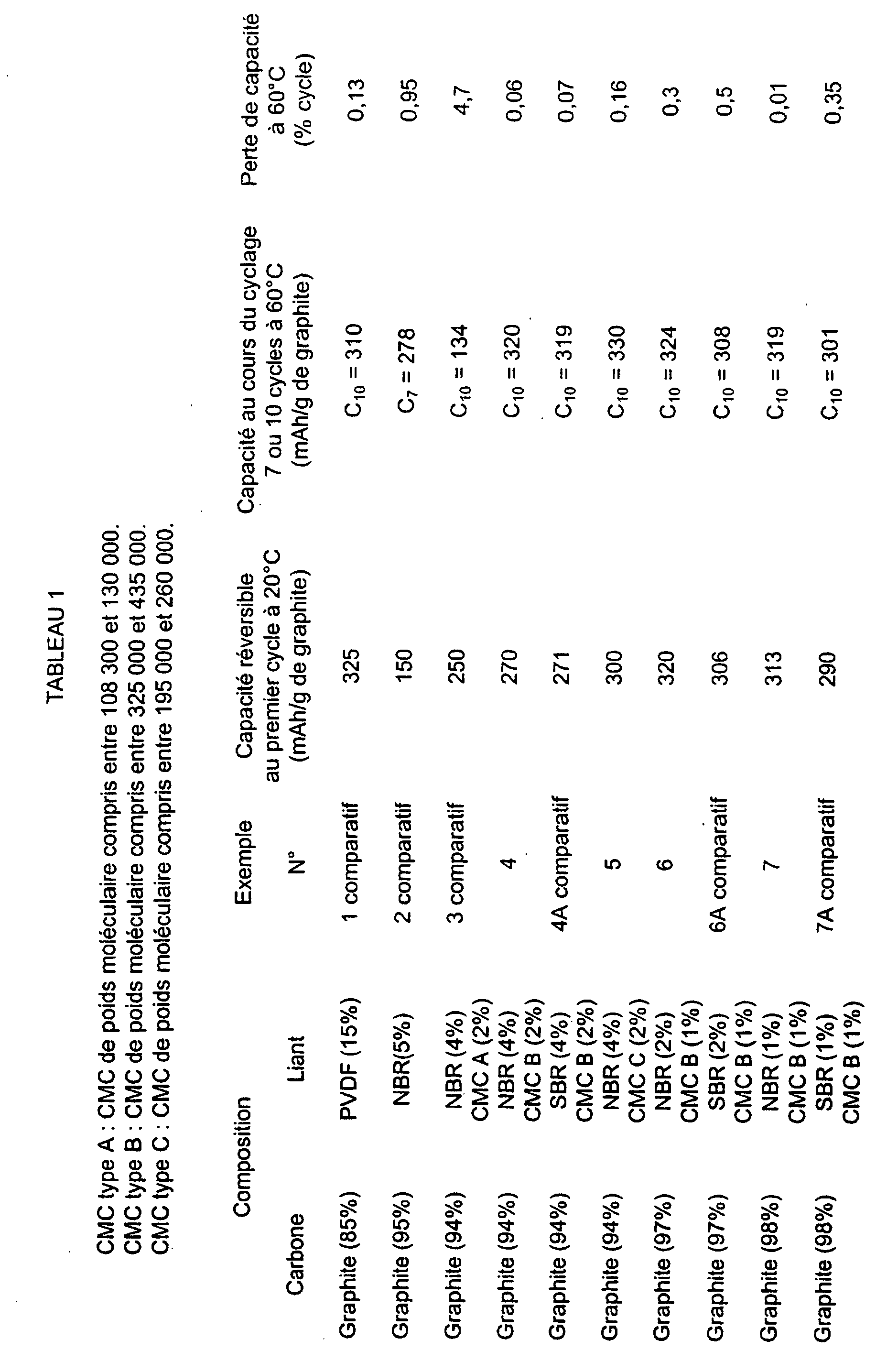

## Revendications

1. Liant pour électrode de système électrochimique à électrolyte non aqueux, **caractérisé en ce qu'**il contient du caoutchouc acrylonitrile-butadiène et de la carboxyméthylcellulose de poids moléculaire moyen supérieur à 200 000.

2. Liant selon la revendication 1, contenant entre 50 et 70 % en poids de caoutchouc acrylonitrile-butadiène et entre 30 et 50% en poids de carboxyméthylcellulose par rapport au poids des deux polymères.

3. Liant selon la revendication 2, contenant entre 60 et 70% en poids de caoutchouc acrylonitrile-butadiène et entre 30 et 40% en poids de carboxyméthylcellulose par rapport au poids des deux polymères.

4. Système électrochimique à électrolyte non aqueux incluant au moins une électrode contenant le liant selon l'une des revendications 1 à 3.

5. Système électrochimique selon la revendication 4, qui est un générateur rechargeable au lithium à électrolyte organique comprenant une électrode négative contenant le liant selon l'une des revendications 1 à 3.

6. Système électrochimique selon la revendication 5, dans lequel ladite électrode négative contient un matériau actif choisi parmi les carbones et les oxydes, les sulfures, les nitrures et les carbures métalliques.

7. Système électrochimique selon l'une des revendications 5 et 6, dans lequel ladite électrode négative contient moins de 6 % en poids de liant.

8. Système électrochimique selon la revendication 7, dans lequel ladite électrode négative contient environ 3 % en poids de liant.

9. Système électrochimique selon l'une des revendications 5 à 8, tel que ledit générateur rechargeable au lithium comprend une électrode positive contenant un matériau actif à base d'oxydes lithiés de métaux de transition.

10. Système électrochimique selon l'une des revendications 5 à 9, dans lequel ledit électrolyte organique est une solution d'un sel conducteur dissous dans un solvant choisi parmi les carbonates, les esters d'alkyle, les composés cycliques comprenant un atome d'azote et d'oxygène, les éthers et leurs mélanges.

## Patentansprüche

1. Bindemittel für Elektrode eines elektrochemischen Systems mit nichtwässrigem Elektrolyten, **dadurch gekennzeichnet, dass** es Butadien-Acryl-Nitril-Kautschuk und Carboxymethylzellulose mit einem mittleren Molekulargewicht oberhalb von 200 000 enthält.

2. Bindemittel nach Anspruch 1, welches zwischen 50 und 70 Gewichtsprozent Butadien-Acryl-Nitril-Kautschuk und zwischen 30 und 50 Gewichtsprozent Carboxymethylzellulose in Bezug auf das Gewicht der beiden Polymere enthält.

3. Bindemittel nach Anspruch 2, welches zwischen 60 und 70 Gewichtsprozent Butadien-Acryl-Nitril-Kautschuk und zwischen 30 und 40 Gewichtsprozent Carboxymethylzellulose in Bezug auf das Gewicht der beiden Polymere enthält.

4. Elektrochemisches System mit nichtwässrigem Elektrolyten, welches wenigstens eine Elektrode aufweist, welche das Bindemittel nach einem der Ansprüche 1 bis 3 enthält.

5. Elektrochemisches System nach Anspruch 4, welches ein wiederaufladbarer Lithium-Generator mit organischem Elektrolyten ist, der eine Elektrode mit dem Bindemittel nach einem der Ansprüche 1 bis 3 aufweist.

6. Elektrochemisches System nach Anspruch 5, bei welchem die negative Elektrode ein aktives Material enthält, das aus Kohlenstoffen und metallischen Oxiden, Sulfiden, Nitriden und Karbiden gewählt ist.

7. Elektrochemisches System nach einem der Ansprüche 5 und 6, bei welchem die negative Elektrode weniger als 6 Gewichtsprozent Bindemittel enthält.

8. Elektrochemisches System nach Anspruch 7, bei welchem die negative Elektrode ungefähr 3 Gewichtsprozent Bindemittel enthält.

9. Elektrochemisches System nach einem der Ansprüche 5 bis 8, bei welchem der wiederaufladbare Lithiumgenerator eine positive Elektrode aufweist, welche ein aktives Material auf der Grundlage von Lithiumoxiden der Übergangsmetalle enthält.

10. Elektrochemisches System nach einem der Ansprüche 5 bis 9, bei welchem der organische Elektrolyt eine Lösung eines Leitsalzes ist, das in einem Lösungsmittel, gewählt aus Carbonaten, Alkylestern, zyklischen Verbindungen mit einem Stickstoff- und Sauerstoffatom, Ethern und deren Mischungen gelöst ist.

## Claims

1. A binder for an electrode in an electrochemical system with a non-aqueous electrolyte, **characterized in that** it contains acrylonitrile-butadiene rubber and carboxymethylcellulose with an average molecular weight of over 200 000.

2. A binder according to claim 1 containing from 50% to 70% by weight of acrylonitrile-butadiene rubber and from 30% 50% by weight of carboxymethylcellulose with respect to the weight of the two polymers.

3. A binder according to claim 2 containing from 60% to 70% by weight of acrylonitrile-butadiene rubber and from 30% to 40% by weight of carboxymethylcellulose with respect to the weight of the two polymers.

4. An electrochemical system with a non-aqueous electrolyte including at least one electrode containing the binder according to any of claims 1 to 3.

5. An electrochemical system according to claim 4 which is a rechargeable lithium cell with an organic electrolyte comprising a negative electrode containing the binder according to any of claims 1 to 3.

6. An electrochemical system according to claim 5 wherein said negative electrode contains an active material selected from carbons and metal oxides, sulphides, nitrides and carbides.

7. An electrochemical system according to claim 5 or claim 6 wherein said negative electrode contains less than 6% by weight of binder.

8. An electrochemical system according to claim 7 wherein said negative electrode contains about 3% by weight of binder.

9. An electrochemical system according to any of claims 5 to 8 wherein said rechargeable lithium cell comprises a positive electrode containing an active material based on lithiated transition metal oxides.

10. An electrochemical system according to any of claims 5 to 9 wherein said organic electrolyte is a solution of a conductive salt dissolved in a solvent selected from carbonates, alkyl esters, cyclic compounds containing a nitrogen and an oxygen atom, ethers and mixtures thereof.
